# EUROPÄISCHE PATENTSCHRIFT

(11) **EP 3 300 873 B1**
(45) Veröffentlichungstag und Bekanntmachung des Hinweises auf die Patenterteilung: **29.01.2020**
(21) Anmeldenummer: 17193696.6
(22) Anmeldetag: 28.09.2017
(51) Int. Cl.: B29C 48/152, B32B 15/08, B32B 1/08, B23K 26/244, B29C 48/25, B29C 48/32

(54) **EXTRUSIONSEINRICHTUNG ZUR BILDUNG EINER ROHRFÖRMIGEN KUNSTSTOFFINNENSCHICHT EINES MEHRSCHICHTVERBUNDROHRES**
EXTRUSION FACILITY FOR FORMING A TUBULAR PLASTIC INTERNAL LAYER OF A MULTI-LAYER COMPOSITE TUBE
DISPOSITIF D'EXTRUSION PERMETTANT DE FORMER UNE COUCHE INTERNE EN MATIÈRE PLASTIQUE TUBULAIRE D'UN TUYAU COMPOSITE MULTICOUCHE

(30) Priorität: 29.09.2016 DE 202016105436 U
(43) Veröffentlichungstag der Anmeldung: 04.04.2018
(73) Patentinhaber: WRW Westfälische Rohrwerke GmbH, 59227 Ahlen (DE)
(72) Erfinder: POSTLER, Stefan, 97461 Hofheim (DE)
(74) Vertreter: Meinke, Jochen

(56) Entgegenhaltungen:
- EP-A1- 1 876 006
- DE-A1-102005 053 347
- DE-A1-102009 012 072
- DE-A1-102009 013 248
- DE-C1- 19 629 037

## Beschreibung

Die Erfindung betrifft eine Extrusionseinrichtung zur Bildung einer rohrförmigen Kunststoffinnenschicht eines Mehrschichtverbundrohres mit einer Extrusionsdüse aus Metall, deren rohrförmige Außenfläche angrenzend an das Austrittsende bereichsweise als Gegenlager für eine Laserschweißeinrichtung zum Längsverschweißen einer die Kunststoffinnenschicht umgebenden Metallfolie dient.

Eine solche Extrusionseinrichtung und eine Anlage zum Herstellen eines Mehrschichtverbundrohres sind aus DE 10 2009 012 072 A1 bekannt. Bei einer solchen Extrusionsdüse kann es beim Laserschweißen passieren, dass eine ungewollte Verbindung der Metallfolie mit dem Gegenlager, d.h. der Außenfläche der Extrusionsdüse entsteht, wenn die Laserstrahlen vollständig die Metallfolie durchdringen und bis in die Außenwand der Extrusionsdüse eindringen. Dadurch kann die Extrusionsdüse zerstört werden.

Zur Lösung dieses Problems ist es aus DE 10 2005 053 347 B4 bekannt, das Metallband zunächst in einen von der Kreisform abweichenden rohrförmigen Körper derart umzuformen, dass der Bereich der sich überlappenden Längsränder asymmetrisch nach außen geformt ist, wobei nachfolgend die Längsränder des rohrförmigen Körpers laserverschweißt werden und anschließend der rohrförmige Körper in eine Kreisform umgeformt wird. Durch diese zunächst von der Kreisform abweichende asymmetrische Umformung des Metallbandes ist es möglich, im Schweißbereich einen rückseitigen Freiraum bereitzustellen, welcher den Einsatz eines Laserschweißverfahrens mit einem herkömmlichen Faser-Laser ermöglicht, ohne dass eine Verbindung mit dem Gegenlager erfolgt. Dabei ändert sich durch die asymmetrische Form im Schweißbereich der Strömungsquerschnitt der Extrusionsdüse nur unwesentlich, so dass die gewünschte Rohrproduktionsgeschwindigkeit gewährleistet bleibt. Allerdings ist ein zusätzlicher Verfahrensschritt erforderlich, um das Metallband zunächst asymmetrisch umzuformen und nach dem Verschweißen in eine Kreisform zu verformen. Aus EP 1 876 006 A1 ist eine Extrusionseinrichtung bekannt, bei der im Bereich der Schweißeinrichtung eine auswechselbare Kalibrierhülse angeordnet ist.

Aufgabe der Erfindung ist es, eine Lösung zu schaffen, mit der mit möglichst hohen Produktionsgeschwindigkeiten gasdichte Mehrschichtverbundrohre mit längs überlappt verschweißten Metallschichten auf konstruktiv möglich einfache Weise unter Verringerung der durch das Verschweißen bedingten Probleme geschaffen werden können.

Diese Aufgabe wird bei einer Extrusionseinrichtung der eingangs bezeichneten Art erfindungsgemäß dadurch gelöst, dass der als Gegenlager dienende Bereich der Extrusionsdüse eine Ausnehmung in der Außenwand aufweist, in welcher eine Einlage aus einem Laserstrahlen absorbierenden und/oder reflektierenden Material aufgenommen ist, wobei die Einlage aus Graphit oder aus Keramik, Wolfram, Titan, Niob, Silber, Gold oder Kupfer oder Sinterwerkstoffen besteht.

Durch diese Ausgestaltung der Extrusionsdüse lässt sich zuverlässig vermeiden, dass Laserstrahlen bis in die metallische Wandung der Extrusionsdüse eindringen können, so dass keine ungewollte Verbindung zwischen der zu verschweißenden Metallfolie und dem Gegenlager, also der Außenwand der Extrusionsdüse, stattfindet. Die Einlage kann je nach Notwendigkeit beliebig oft erneuert werden. Als Werkstoff können auch Kombinationen aus absorbierenden Materialien und hochwarmfesten und/oder hochwärmeleitfähigen Materialien als Festkörper oder Sinterwerkstoffe verwendet werden.

Grundsätzlich ist es z.B. aus DE 196 29 037 C1 bekannt, dass Laserstrahlen durch eine Beschichtung aus Graphit absorbiert werden können und eine solche Beschichtung als Schutzvorrichtung für Laserstrahlen dienen kann.

In ganz besonders bevorzugter Ausgestaltung ist vorgesehen, dass die rohrförmige Extrusionsdüse wenigstens im als Gegenlager dienenden Bereich eine kreisförmige Außenwand und eine dazu exzentrisch angeordnete kreisförmige Innenwand aufweist, wobei in dem dadurch gebildeten verdickten Wandbereich die Ausnehmung ausgebildet ist. Auf diese Weise ist es möglich, die Wandstärke der Extrusionsdüse so gering wie möglich zu halten. Sie ist im Wesentlichen nur in dem Bereich vergrößert, der die Ausnehmung für die Einlage aufweist. Ansonsten wäre es erforderlich, die Extrusionsdüse insgesamt dickwandiger auszubilden, wodurch der Innendurchmesser für einen einwandfreien Extrusionsvorgang in der Regel zu klein wäre.

Die Erfindung betrifft auch eine Anlage zum Herstellen eines Mehrschichtverbundrohres mit einer Umformeinrichtung zum Umformen eines Metallbandes in einen rohrförmigen Körper mit sich überlappenden Längsrändern, mit einer Laserschweißeinrichtung zum Verschweißen der benachbarten überlappenden Längsränder des rohrförmigen Körpers sowie mit einer vorbeschriebenen Extrusionseinrichtung.

Die Erfindung ist nachstehend anhand der Zeichnung beispielhaft näher erläutert. Diese zeigt in
- Fig. 1: eine schematische Seitenansicht der wesentlichen Teile einer Anlage zum Herstellen von Mehrschichtverbundrohren mit einer erfindungsgemäßen Extrusionseinrichtung,
- Fig. 2: eine Draufsicht auf die Extrusionseinrichtung,
- Fig. 3: eine Seitenansicht der Extrusionseinrichtung,
- Fig. 4: einen Schnitt gemäß der Linie A-A in Fig. 2 und
- Fig. 5: ein vergrößertes Detail B in Fig. 3 um 90° verdreht.

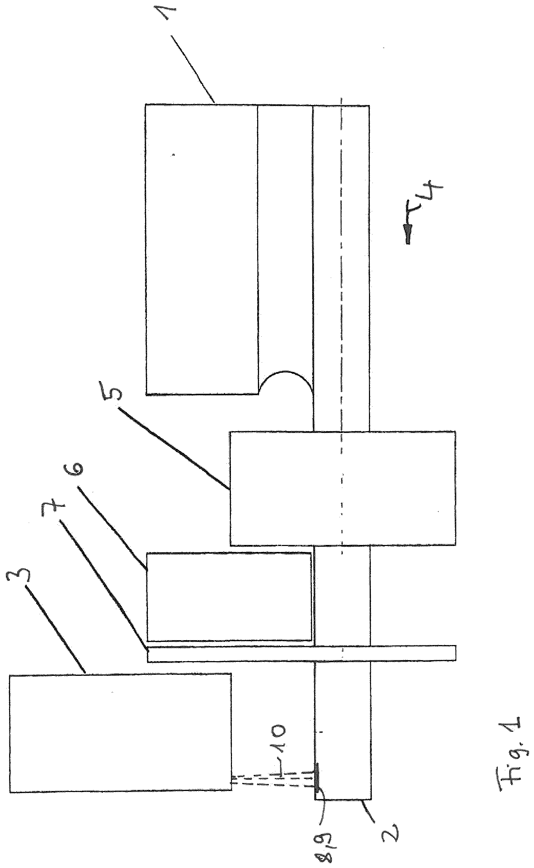

Eine in Fig. 1 schematisch und nur teilweise dargestellte Anlage dient zur Herstellung von Mehrschichtverbundrohren. Unter solchen Mehrschichtverbundrohren werden bevorzugt Metallrohre verstanden, die innenseitig und ggf. außenseitig jeweils mit einer Kunststoffschicht versehen sind, wobei beidseitig auf das Metallrohr jeweils bevorzugt ein Haftvermittler aufgetragen ist.

In Fig. 1 sind nur die für die Erfindung wesentlichen Teile einer solchen Anlage dargestellt.

Dabei weist die Anlage zunächst eine Extrusionseinrichtung 1 mit einer Extrusionsdüse 2 auf. Diese Extrusionsdüse 2 dient angrenzend an das Austrittsende als Gegenlager für eine Laserschweißeinrichtung 3, wobei dieser Bereich in nachfolgend näher beschriebener Weise speziell gestaltet ist. Die Extrusionsdüse 2 endet mit ihrem freien Endbereich in Produktionsrichtung (Pfeil 4) gesehen hinter der Laserschweißeinrichtung 3, d.h. die nicht dargestellte Kunststoffinnenschicht wird in den bereits gebildeten metallischen rohrförmigen Körper extrudiert.

Der nicht dargestellte metallische rohrförmige Körper wird zunächst in Form eines Metallbandes zugeführt und von einer Umformeinrichtung 5 in eine Rohrform mit überlappenden Längsrändern umgeformt. In Produktionsrichtung gesehen hinter der Umformeinrichtung 5 kann eine Einrichtung 6 zur Vorfixierung der überlappenden Längsränder vorgesehen sein. Eine solche Einrichtung ist in DE 10 2009 012 072 A1 beschrieben, worauf Bezug genommen wird. Zwischen der Einrichtung zur Vorfixierung 6 und der Laserschweißeinrichtung 3 ist vorzugsweise eine wandförmige Abschirmung 7 angeordnet.

Bei einer solchen Anlage wird somit zunächst der metallische rohrförmige Körper gebildet, und zwar zunächst vorzugsweise durch Vorfixierung der überlappenden Längsränder mittels der Einrichtung 6 und anschließender Längsverschweißung mittels der Laserschweißeinrichtung 3. Im Anschluss daran wird mittels der Extrusionsdüse 2 die Kunststoffinnenschicht zugeführt.

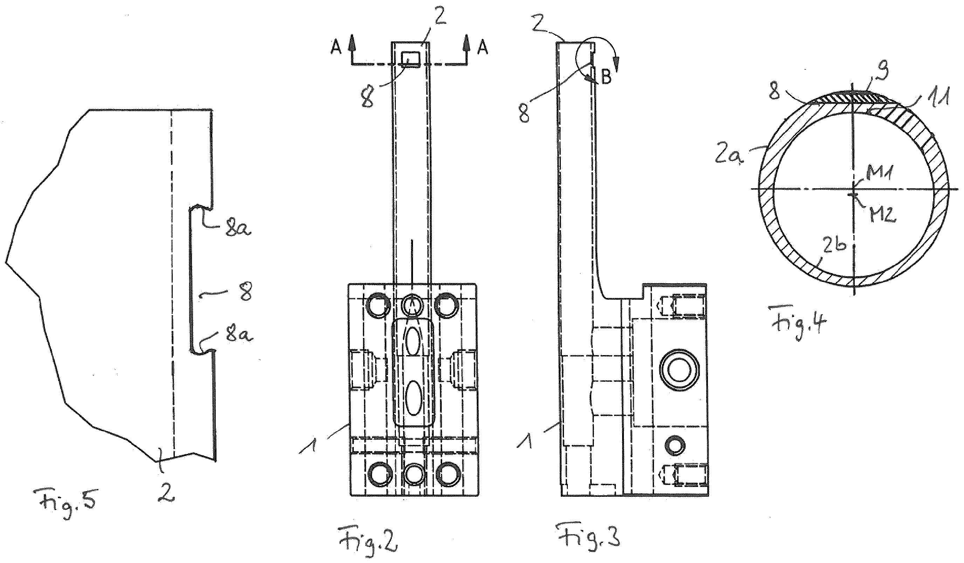

Der Aufbau der erfindungsgemäßen Extrusionseinrichtung 1 ist im Detail in den Figuren 2 bis 5 dargestellt.

Der als Gegenlager dienende Bereich der Extrusionsdüse 2 weist in seiner Außenwand eine Ausnehmung 8 auf. In dieser Ausnehmung 8 ist eine Einlage 9 aus einem Laserstrahlen absorbierenden und/oder reflektierenden Material, vorzugsweise aus Graphit, aufgenommen. Symbolisch angedeutete Laserstrahlen 10 der Laserschweißeinrichtung 3 treffen auf die überlappenden Längsränder der nicht dargestellten Metallfolie. Sollten sie die doppellagigen Randbereiche die Metallfolien durchdringen, treffen sie dann auf die Einlage 9 und werden in dieser absorbiert, so dass sie nicht bis in die metallische Wand der Extrusionsdüse 2 gelangen können und es dadurch nicht zu einer Verklebung der Metallfolie mit der Extrusionsdüse 2 kommen kann.

Bevorzugt ist gemäß Figur 4 vorgesehen, dass die rohrförmige Extrusionsdüse 2 wenigstens im als Gegenlager dienenden Bereich eine kreisförmige Außenwand 2a und eine dazu exzentrisch angeordnete kreisförmige Innenwand 2b aufweist. Die beiden Kreismittelpunkte sind in Fig. 4 mit M1 bzw. M2 bezeichnet. Durch diese exzentrische Anordnung ist ein verdickter Wandbereich 11 gebildet, in welchem die Ausnehmung 8 für die Einlage 9 ausgespart ist. Auf diese Weise ist es möglich, ohne wesentliche Vergrößerung des Außendurchmessers der Extrusionsdüse 2 als ausreichende Wandstärke für die Ausnehmung 8 bereit zu stellen, d.h. die Extrusionsdüse 2 insgesamt muss nicht dickwandiger ausgebildet werden, wodurch sich der Innendurchmesser verringern würde.

Wie aus Figur 5 hervorgeht, weist die Ausnehmung 8 an zwei Randkanten bevorzugt einen Hinterschnitt 8a auf, womit die Einlage 9 sicher in der Aufnahme 8 gehalten ist.

### Bezugszeichenliste:

- 1: Extrusionseinrichtung
- 2: Extrusionsdüse
- 2a: Außenwand
- 2b: Innenwand
- 3: Laserschweißeinrichtung
- 4: Pfeil
- 5: Umformeinrichtung
- 6: Einrichtung zur Vorfixierung
- 7: Abschirmung
- 8: Ausnehmung
- 8a: Hinterschnitt
- 9: Einlage
- 10: Laserstrahlen
- 11: Wandbereich
- M1: Mittelpunkt
- M2: Mittelpunkt

## Patentansprüche

1. Extrusionseinrichtung zur Bildung einer rohrförmigen Kunststoffinnenschicht eines Mehrschichtverbundrohres mit einer Extrusionsdüse (2) aus Metall, deren rohrförmige Außenfläche angrenzend an das Austrittsende bereichsweise als Gegenlager für eine Laserschweißeinrichtung (3) zum Längsverschweißen einer die Kunststoffinnenschicht umgebenden Metallfolie dient,
**dadurch gekennzeichnet,**
**dass** der als Gegenlager dienende Bereich der Extrusionsdüse (2) eine Ausnehmung (8) in der Außenwand aufweist, in welcher eine Einlage (9) aus einem Laserstrahlen absorbierenden und/oder reflektierenden Material aufgenommen ist, wobei die Einlage (9) aus Graphit oder aus Keramik, Wolfram, Titan, Niob, Silber, Gold oder Kupfer oder aus Sinterwerkstoffen besteht.

2. Extrusionseinrichtung nach Anspruch 1,
**dadurch gekennzeichnet,**
**dass** die rohrförmige Extrusionsdüse (2) wenigstens im als Gegenlager dienenden Bereich eine kreisförmige Außenwand (2a) und eine dazu exzentrisch angeordnete kreisförmige Innenwand (2b) aufweist, wobei in dem dadurch gebildeten verdickten Wandbereich (11) die Ausnehmung (8) ausgebildet ist.

## Claims

1. Extrusion device for forming a tubular plastic inner layer of a multi-layer composite tube having an extrusion nozzle (2) made from metal, the tubular outer surface of which, adjacent to the outlet end in regions, serves as a counter bearing for a laser welding device (3) for the longitudinal welding of a metal foil surrounding the plastic inner layer, **characterised in that** the region of the extrusion nozzle (2) serving as a counter bearing comprises a recess (8) in the outer wall in which an inlet (9) made from a material which absorbs and/or reflects laser beams is received, wherein the inlet (9) consists of graphite or of ceramic, tungsten, titanium, niobium, silver, gold or copper or of sintered materials.

2. Extrusion device according to claim 1,
**characterised in that**
the tubular extrusion nozzle (2) comprises, at least in the region serving as a counter bearing, a circular outer wall (2a) and a circular inner wall (2b) arranged off-centre with respect thereto, wherein the recess (8) is formed in the thickened wall region (11) formed thereby.

## Revendications

1. Dispositif d'extrusion destiné à former une couche intérieure plastique tubulaire d'un tube composite multicouche, avec une filière d'extrusion (2) composée de métal, dont la surface extérieure tubulaire, de manière adjacente à l'extrémité de sortie, sert par endroits d'appui complémentaire pour un dispositif de soudage laser (3) pour le soudage longitudinal d'une feuille métallique entourant la couche intérieure plastique,
**caractérisé en ce**
**que** la zone, servant d'appui complémentaire, de la filière d'extrusion (2) présente un évidement (8) dans la paroi extérieure, dans laquelle est logée une couche intermédiaire (9) composée d'un matériau absorbant et/ou réfléchissant des faisceaux laser, dans lequel la couche intermédiaire (9) est constituée de graphite ou de céramique, de tungstène, de titane, de niobium, d'argent, d'or ou de cuivre ou de matériaux frittés.

2. Dispositif d'extrusion selon la revendication 1,
**caractérisé en ce**
**que** la filière d'extrusion (2) tubulaire présente au moins dans la zone servant d'appui complémentaire une paroi extérieure (2a) circulaire et une paroi intérieure (2b) circulaire disposée de manière excentrée par rapport à celle-ci, dans lequel l'évidement (8) est réalisé dans la zone de paroi (11) épaissie ainsi formée.
